# EUROPEAN PATENT APPLICATION

(11) **EP 1 530 892 A1**
(43) Date of publication of application: **18.05.2005**
(21) Application number: 04077988.6
(22) Date of filing: 01.11.2004
(51) Int. Cl.: A01D 34/86

(54) **Grass trimmer with lateral cutting plates**

(30) Priority: 12.11.2003 IT RE20030108
(71) Applicant: Gianni Ferrari S.r.l., 42046 Reggiolo, Reggio Emilia (IT)
(72) Inventor: Ferrari, Vando Gianni, 42046 Reggiolo Reggio Emilio (IT)
(74) Representative: Corradini, Corrado

(57) **Abstract**

Grass trimmer comprising a self-propelled motorized frame with which at least one lateral cutting plate provided with at least one rotary cutting blade is associated, said at least one lateral cutting plate being associated with said frame by adjustment means able to position it in a plurality of cutting positions, in each of which said at least one rotary cutting blade lies at a predetermined distance from the longitudinal axis of said grass trimmer.

## Description

The present invention relates to a grass trimmer with lateral cutting plates of the type used for grass cutting in areas of large dimensions, such as large parks, or fields on which sporting activities take place.

Grass trimmers are known comprising a tractor, a front cutting plate and at least one lateral cutting plate positioned on the side of the grass trimmer. On each of said cutting plates, rotary cutting blades are mounted adjustable in height by suitable adjustment means. Adjustment is essential to maintain a predetermined constant grass height; consider for example the grass of a golf course.

The tractor, driven by a specialized operator, comprises at least three wheels and is driven by an electric motor or internal combustion engine.

Said cutting blades are rotated by suitable rotating devices, on which said blades are fixed and which are operated by hydraulic motors to which said devices are connected by suitable transmission means.

During grass cutting by said grass trimmers the problem arises of cushioning the impacts between the lateral plates and possible obstacles, such as plants, miscellaneous objects or shrubs which cannot be avoided; it is therefore known to provide protection and damping devices known as shock absorbers, which enable the lateral cutting plates to make small rotations or translations such as to absorb the impacts, travel around the obstacles and then, when said obstacles have been overcome, return to their predetermined initial position.

A subsequent problem is related to the fact that while said lateral cutting plates are traveling around the obstacle, grass regions close to said obstacle remain uncut; this drawback can be overcome by maneuvers, difficult because of the transverse overall dimensions of the grass trimmer, which do not always succeed in cutting said grass regions.

An object of the invention is to overcome the stated drawbacks within the framework of a simple and rational solution.

The invention comprises a self-propelled motorized frame with which at least one lateral cutting plate provided with at least one rotary cutting blade is associated, said plate being associated with said frame by means enabling it to position it in a plurality of cutting positions, in each of which said blade lies at a predetermined distance from the longitudinal axis of the frame.

According to a preferred embodiment the self-propelled motorized frame comprises a central front cutting plate and two lateral cutting plates disposed symmetrically about the longitudinal axis of the grass trimmer.

According to the invention the self-propelled motorized frame can also comprise plate inclination adjustment devices arranged to position said plate between a rest position and a working position.

Finally according to the invention, said at least one lateral cutting plate can oscillate about a vertical axis when it accidentally collides with an obstacle, a device being provided to damp the impact and to return the plate to its working position on overcoming the obstacle.

From the description it is apparent that by virtue of the invention the obstacle can be overcome, and the working width of said at least one lateral cutting plate can be adjusted at will, using low-cost adjustment means of small overall size which enable the grass to be cut even in those regions close to the obstacle, without undertaking numerous maneuvers.

The constructional characteristics and merits of the invention will be apparent from the ensuing detailed description given with reference to the figures of the accompanying drawings, which illustrate by way of non-limiting example a particular preferred embodiment of the grass trimmer according to the invention.
Figure 1 is a view of the invention from above.
Figure 2 shows, seen from above, an enlargement of the lateral cutting plate of Figure 1, in a first operative configuration.
Figure 3 shows, seen from above, an enlargement of the lateral cutting plate of Figure 1, in a second operative configuration.
Figure 4 is a side view of the lateral cutting plate of Figure 2.
Figure 5 is an enlarged view of a detail of the invention.
Figure 6 is the section VI-VI of Figure 5.

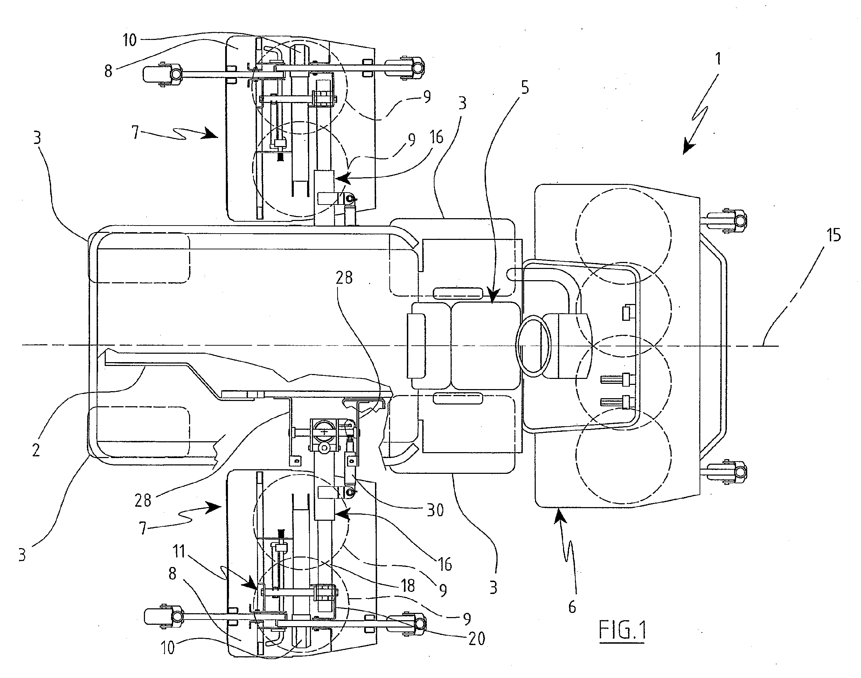

Figure 1 shows a grass trimmer 1, comprising a frame 2 provided with wheels 3, of which at least the front wheels are driven by an internal combustion engine, not shown because of known type. The frame 2 is provided with a usual driving seat 5 for a specialized operator.

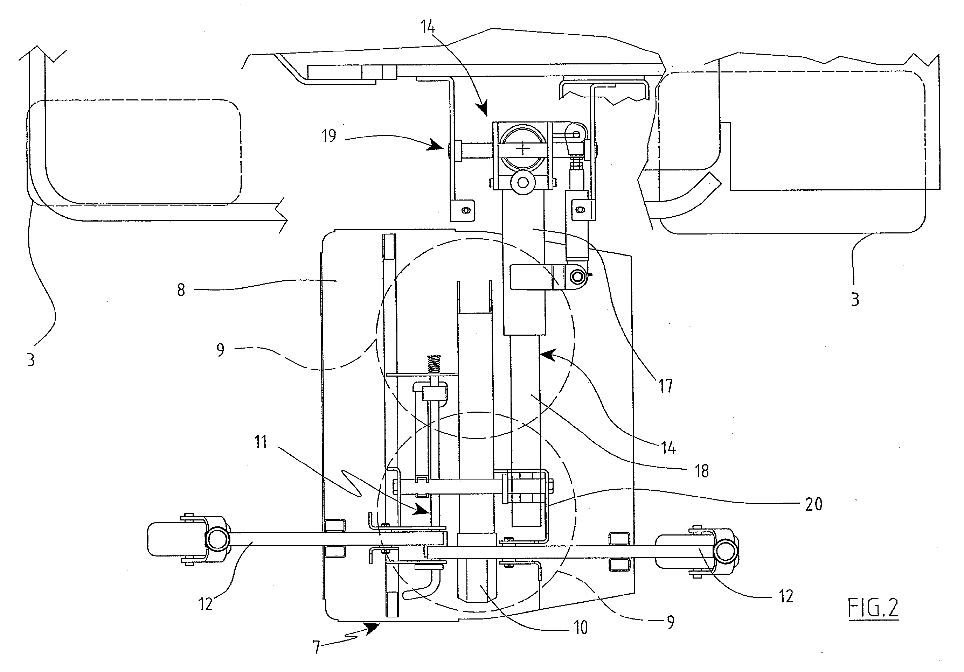

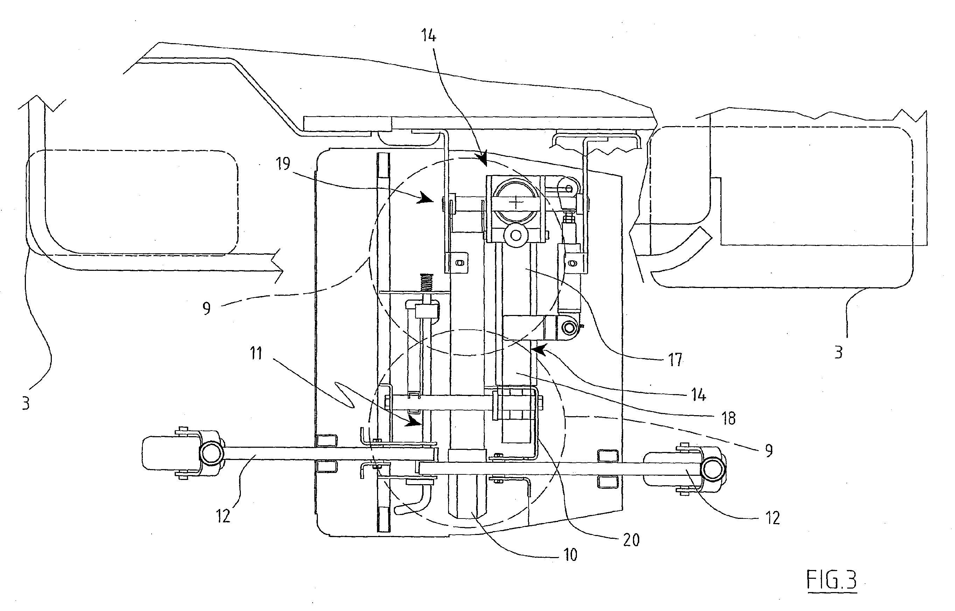

Associated with said frame 2 there are a front cutting plate 6 and two identical lateral cutting plates 7, each of which comprises a frame 8 supporting two mutually linked cutting blades 9 rotated by a hydraulic motor 10. Known means 11 are provided on the frame 8 to enable the height of said cutting blades 9 to be adjusted. Each cutting plate 7 is provided with idle swivel wheels 12 rigid with the frame 8 and is associated with the grass trimmer frame 2 by adjustment means 14 able to position it in a plurality of cutting positions, in each of which the plate edge lies at a predetermined distance from the longitudinal axis 15 of the grass trimmer, as shown in Figures 2 and 3.

Said adjustment means 14 comprise a pneumatic or hydraulic cylinder-piston unit, of which the jacket 17 is hinged on a vertical axis to a box member 19 associated with the frame 2, the piston rod 18 being connected to the plate frame 8 by a lug 20.

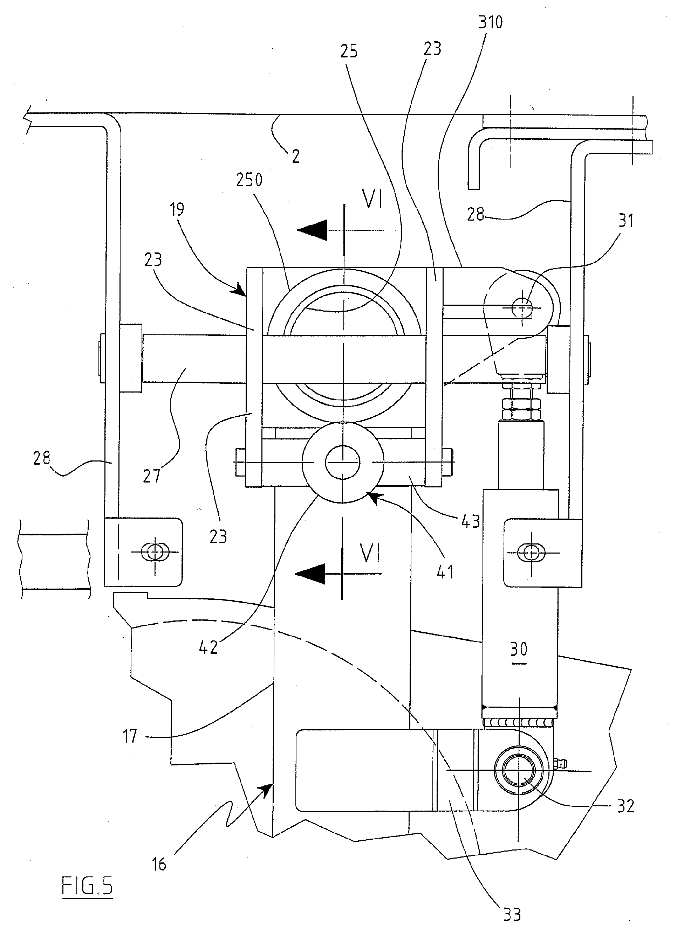

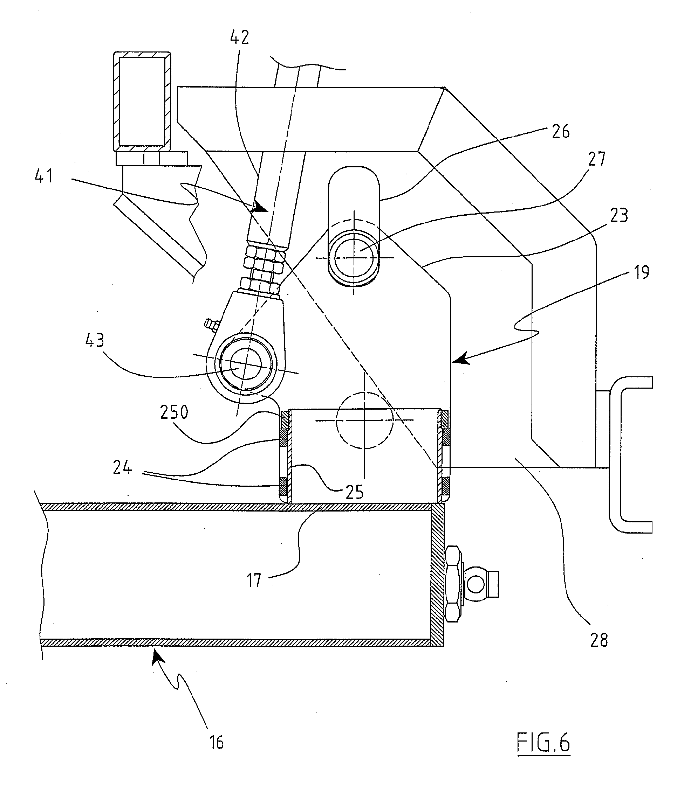

Said cylinder-piston unit 17, 18 is operated by a hydraulic or pneumatic circuit, not shown, and is controlled by the operator by usual control devices. In particular, with reference to Figures 5 and 6, said box member 19, rigid with the frame 2, comprises two parallel flat plates 23, rigid with two rings 24 receiving a cylindrical sleeve 25 branching from the jacket 17 of the cylinder-piston unit 17, 18. The cylindrical sleeve 25 is prevented from withdrawing from the guide rings by a retention nut 250. The plates 23 of the box member present two holes (Figure 6) for receiving a pin 27, the ends of which are inserted into two slots 26 provided in two walls 28 branching from the frame 2 of the grass trimmer 1.

The connection between the cylinder-piston unit 17, 18 and the frame 2 enables each plate 7 to rotate about the vertical axis of the sleeve 25 whenever one of the two plates 7 encounters an obstacle during the use of the grass trimmer 1.

Each of the sleeves 17 is also connected to a device 30, the purpose of which is to brake the rotation of the respective plate whenever this collides with an obstacle, and to return it into its correct working position when said obstacle has been overcome (Figure 5).

Said damper device 30 (Figures 5 and 6), of known type, is of the double acting type and is connected at one end to a pin 30 positioned between two lugs 310 branching from one of said cutting plates, and at its opposite end is connected to the pin 32 of a bracket 33 rigid with the jacket 17 of the cylinder-piston unit 16.

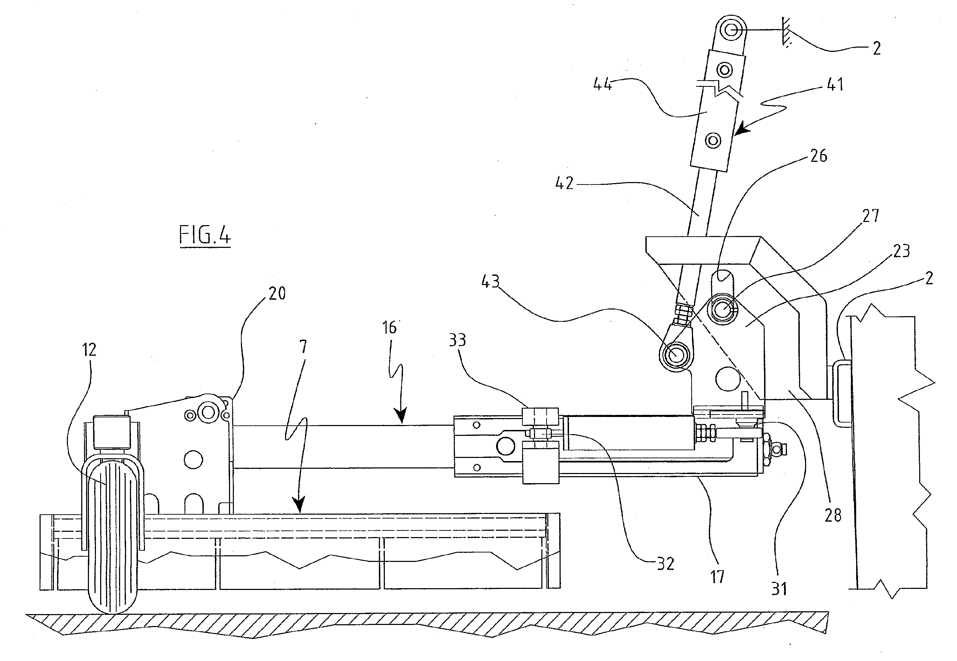

With reference to Figure 4, the grass trimmer 1 also comprises devices for adjusting the inclination of said cutting plates 7, in order to position said plates 7 substantially perpendicular to the ground on termination of the grass cutting operations, to enable the grass trimmer 1 to travel on roads, or to undergo maintenance operations, or to achieve a smaller overall size during garaging of the grass trimmer.

Said devices for adjusting the plate inclination (see Figure 4) comprise a single acting pneumatic or hydraulic cylinder-piston unit 41, the piston rod 42 of which is hinged to a pin 43 positioned between the plates 23 of the box member 19. The cylinder 44 of the cylinder-piston unit is hinged to the grass trimmer frame 2 by usual hinge-type means.

Said inclination adjustment means for the plates 7 are operated by a hydraulic circuit and controlled by the operator by usual control devices, not shown.

It should be noted that the single-acting cylinder-piston unit 41 enables the pin 27, the ends of which slide in the slots 26, and hence the plate 23, to translate and rotate relative to the frame 2 if ground undulations cause the plate 7 to vary its position.

## Claims

1. A grass trimmer (1) comprising a self-propelled motorized frame (2) with which at least one lateral cutting plate (7) provided with at least one rotary cutting blade is associated, **characterized in that** said at least one lateral cutting plate (7) is associated with said frame (2) by adjustment means (14) able to position it in a plurality of cutting positions, in each of which said at least one rotary cutting blade lies at a predetermined distance from the longitudinal axis (15) of said grass trimmer.

2. A grass trimmer as claimed in claim 1, **characterized in that** said adjustment means (14) comprise a pneumatic or hydraulic cylinder-piston unit (16), the jacket (17) and piston rod (18) of which are associated respectively with the frame (2) and with said at least one lateral cutting plate (7).

3. A grass trimmer as claimed in claim 2, **characterized in that** said jacket (17) is hinged to said frame in such a manner as to enable this latter to oscillate about a vertical axis.

4. A grass trimmer as claimed in claim 3, **characterized in that** said jacket is associated with said frame (2) by a box member (19) branching from the frame (2) and comprising two rings for guiding and retaining a cylindrical sleeve (25) which is rigid with said jacket.

5. A grass trimmer as claimed in claim 1, **characterized in that** said box member comprises a pin (27) the ends of which are received in two slots (26) present in two plates of the frame, to enable said box member to translate relative to the frame.

6. A grass trimmer as claimed in claim 3, **characterized in that** a damper device is associated between said frame (2) and said jacket (7) to damp the oscillations of the frame (8) about said vertical axis, to limit their excursion and to ensure their elastic return

7. A grass trimmer as claimed in claim 1, **characterized by** comprising devices for adjusting the inclination of said at least one lateral cutting plate (7) in order to position it between a working position and a rest position.

8. A grass trimmer as claimed in claims 3 and 6, **characterized in that** the devices for adjusting the inclination of said at least one lateral cutting plate comprise a cylinder-piston unit (41), of which the cylinder (44) is hinged to said frame (8) and the piston rod (42) is hinged to said box member (19).

9. A grass trimmer as claimed in claim 1, **characterized in that** said at least one cutting plate (7) supports two mutually linked cutting blades (9) driven by a hydraulic motor.

10. A grass trimmer as claimed in claim 1, **characterized by** comprising two lateral cutting plates (7) disposed symmetrically about the longitudinal axis (15) of the grass trimmer.

11. A grass trimmer as claimed in claim 1, **characterized by** comprising a front cutting plate (6).
